# EUROPEAN PATENT APPLICATION

(11) **EP 4 710 816 A1**
(43) Date of publication of application: **18.03.2026**
(21) Application number: 24020288.7
(22) Date of filing: 12.09.2024
(51) Int. Cl.: A47B 51/00, A47B 81/06, A47B 53/00

(54) **CABINET WITH A LIFT**

(71) Applicant: Hene sp. z o.o., 00-193 Warszawa (PL)
(72) Inventor: Kowalski, Jakub, 00-193 Warszawa (PL)
(74) Representative: Marcinska-Porzuc, Aleksandra

(57) **Abstract**

A cabinet with a lift for a TV set according to the invention, having outer plate walls forming a cuboid shape, sliding relative to each other, said cabinet containing elements for suspending the TV set inside, in particular a vertical lifting mechanism, to which a supporting element of the TV set is attached, slidingly mounted in vertical guides, is characterized in that the space inside the cuboid cabinet (1, 1', 1") is divided into four cuboid zones: upper rear (GT), upper front (GP), lower rear (DT), lower front (DP). The upper front (GP) and lower front (DP) zones are separated by a horizontal shelf (1.1) and the lower rear (DT) and lower front (DP) zones are separated by a vertical internal wall (1.2). The upper rear wall (1.4) of the cabinet (1, 1', 1") is attached to the upper part of the vertically moving guides (2.1) of the lifting mechanism (2) built into the vertical rear wall (1.3) of the cabinet (1, 1', 1") within the upper rear zone (GT) and the lower rear zone (DT), above the upper edge of the TV set (3) attached to the vertically moving guides (2.1), said upper rear wall (1.4) of the cabinet (1, 1', 1") closing off the top of its upper rear zone (GT). The upper front wall (1.5) of the cabinet (1, 1', 1") closing off the top of its upper front zone (GP) is connected to a mechanism, advantageously a dual lever mechanism, enabling its vertical movement between the vertical side walls (1.6) within the upper front zone (GP) of the cabinet (1, 1', 1") and horizontal movement, outwards beyond the cabinet (1, 1', 1"), above its horizontal shelf (1.1). The movement of the upper front wall (1.5) of the cabinet (1, 1', 1") both vertically and horizontally ensures its constant horizontal position.

## Description

### Field of the Invention

The invention relates to a cabinet with a lift for any device with a screen, designed to hide or expose the device mounted in it.

### Background of the Invention

It is generally known that for the image on the device's screen to be most visible, the device must be positioned at the optimal distance and height for the user's eyes. The optimal distance depends on the size and resolution of the device's screen. The distance at which viewing comfort is achieved depends on the type of content, viewing conditions and the user's individual characteristics. For television devices with 4K or 8K resolution, the user should be at a distance 1.5 times greater than the height of the device screen. When viewing from such a distance, the naked eye does not distinguish individual pixels. This means that the pixels that make up the 4K or 8K image become invisible. As a result, the image on the device appears as detailed as reality. In the case of High Definition television devices, the image should be located at a distance 3 times greater than the height of the device's screen. In turn, the optimal height for user comfort when placing the device screen with a diameter of 40 inches or less is about 1 meter from the floor to the center of the screen. For larger models, for example with a diameter of 55 inches, the optimal height will be about 120 centimeters from the floor to the center of the screen.

### State of the art

The Polish patent PL220581 discloses a TV set enclosure, consisting of outer plate walls and containing elements for suspending a TV set inside and attaching it to an external supporting structure. The TV set enclosure consists of a main rectangular frame and two symmetrical cuboid side frames, mounted on the main frame and coupled to it slidingly by means of a pair of telescopic rails arranged along the horizontal crosspieces of the main frame, where each telescopic rail is assembled from a pair of shaped slats sliding relative to each other. One slat from each pair is connected to the main frame, while the other slat is connected to the side frame. Each side frame is enclosed by walls on the front, top, bottom and side facing the main frame.

The Polish utility model application W. 115745 discloses a lifting device for TV sets comprising a vertical body and a motor-driven lifting mechanism, to which a support element for the TV set is attached, slidingly mounted in vertical guides. The lifting mechanism is an endless cable adapted to cooperate with a gear wheel, wrapped around a gear wheel located in the lower part of the body, driven by a motor and a passive roller located in the upper part of the body. A slider is attached to the cable, equipped with arms for attaching the TV set, built of two vertical closed profiles connected by cross-links, each equipped with two internal guides cooperating with external straight linear guides, attached to two closed vertical profiles connected by cross-plates and a drive platform, forming the device body.

The Polish patent application P.378743 discloses a lift consisting of an enclosure which also acts as the device's supporting frame and a drive mechanism, which is a gear wheel head and a 120W motor. The device also includes a set of arms enabling the installation of TV sets of various brands, and a blind flap with a drive mechanism. The lift is attached to the furniture using 4 Ø6 screws screwed into the upper part of the furniture and 4 expanding feet attached to the bottom of the device.

### Summary of the invention

The object of the present solution is to propose a cabinet with a lift for a device having a large viewing area, for example with a height above 80 cm, which would allow a user sitting opposite the cabinet with the device extended to comfortably view the image on this device at eye level of about 120 cm from the floor to the center of the screen.

This object has been achieved by the cabinet with a lift according to the invention.

The disclosure relates to a cabinet with a lift for a device according to the invention. Advantageously, the cabinet has outer plate walls forming a cuboid shape, sliding relative to each other, containing elements for suspending the device inside, in particular a vertical lifting mechanism, to which a supporting element of the device is attached, slidingly mounted in vertical guides. The space inside the cuboid cabinet is divided into four cuboid zones: upper rear, upper front, lower rear, lower front. The upper front and lower front zones are separated by a horizontal shelf and the lower rear and lower front zones are separated by a vertical internal wall. To the upper part of the vertically moving guides of the lifting mechanism built into the vertical rear wall of the cabinet above the upper edge of the device attached to the vertically moving guides, an upper rear shelf of the cabinet is attached, closing off the top of its upper rear zone. The upper front shelf of the cabinet closing off the top of its upper front zone is connected to a mechanism enabling its vertical movement between the vertical side walls within the upper front zone of the cabinet and horizontal movement, outside the cabinet, above the horizontal shelf of the cabinet. Despite the movement of the upper front shelf of the cabinet both vertically and horizontally, its constant horizontal position is ensured according to the invention.

It is possible for the lifting mechanism built into the vertical rear wall of the cabinet to be partially and/or completely within the upper rear zone and the lower rear zone.

Advantageously, during the movement of the upper front shelf vertically and/or horizontally, its constant horizontal position is ensured.

Advantageously, the dual lever mechanism is responsible for the vertical and/or horizontal movement of the upper front shelf of the cabinet.

The upper front wall of the cabinet is connected to the front upper wall perpendicular to it, with a surface covering the upper front zone of the cabinet.

It is possible for the upper front zone of the cabinet to be closed by a door, similarly, it is possible for the lower front zone of the cabinet to be closed by a door.

The device according to the invention is a TV set, monitor, screen. Advantageously, it is a device where the viewing area has a height exceeding 80 cm, most advantageously when the viewing area has a height exceeding 90 cm.

The cabinet with a lift for a device according to the invention provides the possibility of comfortable viewing of the image on a large (height > 80 cm) device screen by a person sitting on a sofa, when the viewer's eye height is about 120 cm from the floor. When extending the device from the cabinet, the movement of its upper rear shelf ensures its constant horizontal position. The movement of the upper front shelf both vertically and horizontally also ensures its constant horizontal position. Such kinematics allows the placement of e.g., decorative interior design elements on both the upper rear shelf and the upper front shelf.

For example, the upper front shelf can be used for an external speaker of the "soundbar" type.

### Brief Description of the Drawings

The subject of the invention is shown in an exemplary embodiment in the drawings, in which:
- Fig. 1: shows schematically a cabinet according to the first exemplary embodiment of the invention in an axonometric view, with the device hidden,
- Fig. 2: shows schematically a cabinet according to the first exemplary embodiment of the invention in a front view, with the device hidden,
- Fig. 3: shows schematically a cabinet according to the first exemplary embodiment of the invention in an axonometric view, with the device extended and the upper front wall lowered,
- Fig. 4: shows schematically a cabinet according to the first exemplary embodiment of the invention in a front view, with the device extended and the upper front shelf lowered,
- Fig. 5: shows schematically a cabinet according to the first exemplary embodiment of the invention in an axonometric view, with the device extended, the upper front shelf lowered and extended,
- Fig. 6: shows schematically a cabinet according to the first exemplary embodiment of the invention in a front view, with the device extended, the upper front wall lowered and extended,
- Fig. 7: shows schematically a cabinet according to the second exemplary embodiment of the invention in an axonometric view, with the device hidden, the upper front and lower front zone doors closed,
- Fig. 8: shows schematically a cabinet according to the second exemplary embodiment of the invention in an axonometric view, with the device extended, the upper front zone door open and the lower front zone door closed;
- Fig. 9: shows schematically a cabinet according to the third exemplary embodiment of the invention in an axonometric view, with the device hidden, the front upper wall and the lower front zone door closed;
- Fig. 10: shows schematically a cabinet according to the third exemplary embodiment of the invention in an axonometric view, with the device extended, the lower front wall lowered and extended and connected to the front upper wall.

### Detailed description of the invention

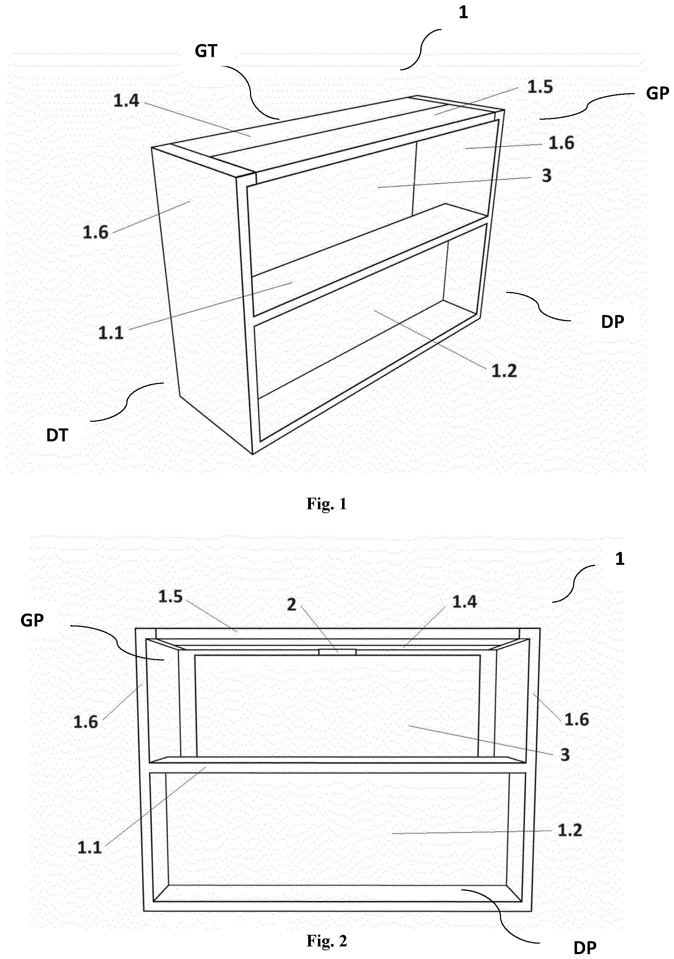

In Fig. 1, the first exemplary embodiment of the solution according to the invention is shown. The cabinet 1 consists of four zones: upper rear zone, GT, upper front zone, GP, lower rear zone, DT, lower front zone, DP. The cabinet 1 has two vertical side walls, 1.6, connected to each other by a horizontal shelf, 1.1. The horizontal shelf 1.1 constitutes the boundary between the upper front zone, GP, and the lower front zone, DP. In the lower front zone, DP, below the horizontal shelf, 1.1, a vertical internal wall, 1.2, is placed. In the upper rear zone, GT, an upper rear shelf, 1.4, is located. In the upper front zone, GP, an upper front shelf, 1.5, is located. The vertical rear wall, 1.3, is located within the upper rear zone, GT, and the lower rear zone, DT. The device, 3, is placed on the vertical rear wall, 1.3. The device, 3, according to the invention can be a monitor, TV set, screen. Advantageously, the upper rear shelf, 1.4, and the upper front shelf, 1.5, have the same width. In Fig. 1, the device, 3, is hidden in the cabinet, 1.

Fig. 2 also reveals the cabinet, 1, according to the first exemplary embodiment in a front view. The device, 3, is placed on the lifting mechanism, 2, which is attached to the vertical rear wall, 1.3, of the cabinet, 1, within the upper rear zone, GT, and the lower rear zone, DT. It is possible for the lifting mechanism, 2, to extend through the entire upper rear zone, GT, and the lower rear zone, DT. It is also possible for the lifting mechanism, 2, to be located only partially in the upper rear zone, GT, and the lower rear zone, DT - in the same proportions, as well as a larger part being in the upper rear zone, GT, and a smaller part in the lower rear zone, DT. And vice versa. The device, 3, is located behind the vertical internal wall, 1.2, so that part of the device, 3, is not visible behind this wall and the horizontal shelf, 1.1, attached to the vertical internal wall, 1.2. In the lower front zone, DP, between the lower front parts of the vertical side walls, 1.6, and the horizontal shelf, 1.1, the vertical internal wall, 1.2, and the lower shelf, 1.8, a masking element is created, masking part of the device, 3. The masking element can be used arbitrarily, for example for storing any common utility items - DVD and CD discs, vases, containers, packaging, photographs. The lifting mechanism, 2, abuts with its upper part to the upper front shelf, 1.4.

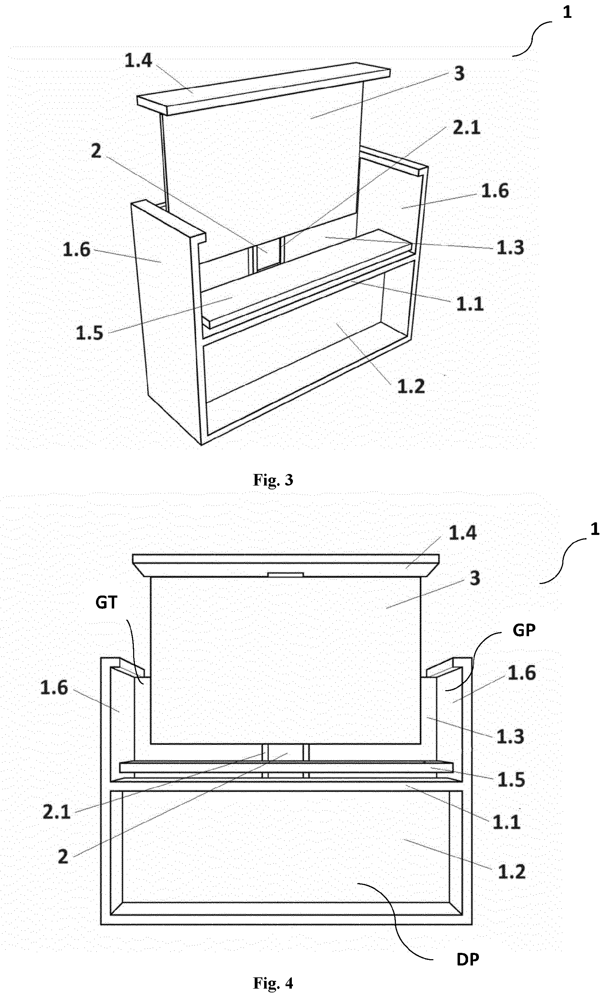

Fig. 3 shows the cabinet, 1, from Figs. 1 and 2, in an axonometric view, but here the device, 3, is extended and is fully visible. By extending the device, 3, the vertical rear wall, 1.3, becomes visible with the lifting mechanism, 2, located on it. The lifting mechanism, 2, is rectangular in shape, and has guides, 2.1, on its longer sides. The lifting mechanism, 2, can also have a square or trapezoidal shape. When the lifting mechanism, 2, connected to the upper rear shelf, 1.4, moves upwards along with the device, 3, located on it, then the upper front shelf, 1.5, is lowered so that it is located above the horizontal shelf, 1.1, being in the upper front zone, GP. The upper front shelf, 1.5, has the same width as the horizontal shelf, 1.1. The upper front shelf, 1.5, can be used for an external "soundbar" type speaker, as it is extended in such a way that objects placed on it do not fall off it during the downward movement, and it maintains a constant horizontal position.

Fig. 4 presents the cabinet, 1, from Fig. 3 only in a front view. The upper front shelf, 1.5, of the cabinet, 1, closing off the top of its upper front zone, GP, is connected to a mechanism, advantageously a dual lever mechanism (not shown in the drawing), enabling its vertical movement between the vertical side walls 1.6 within the upper front zone, GP, of the cabinet, 1. Here, the movement of the upper front shelf, 1.5, of the cabinet, 1, takes place vertically. From Fig. 4, it is clearly seen that the lifting mechanism, 2, above the upper edge of the device, 3, attached to the vertically moving guides 2.1, is attached to the upper rear shelf, 1.4, of the cabinet, 1, closing off the top of its upper rear zone GT. When extending the device, 3, from the cabinet, 1, the movement of its upper rear shelf, 1.4, ensures its constant horizontal position.

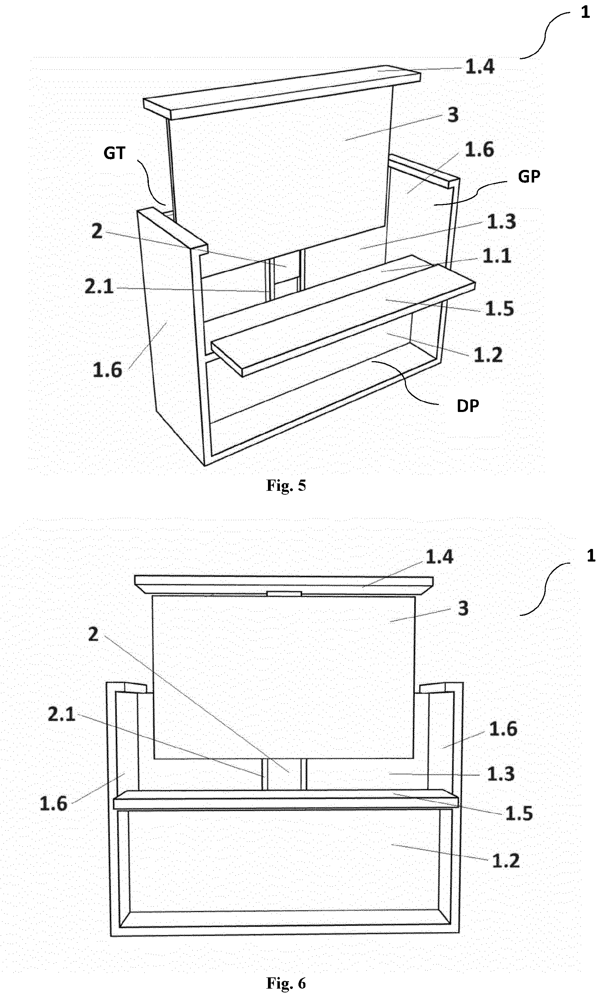

Fig. 5 presents the cabinet, 1, from Fig. 4 only in a perspective view, where the upper front shelf, 1.5, of the cabinet, 1, is extended outwards beyond the cabinet, 1, above its horizontal shelf 1.1. The mechanism to which the upper front shelf, 1.5, of the cabinet, 1, is connected, allows, in addition to the vertical movement between the vertical side walls 1.6, also a horizontal movement, outwards beyond the cabinet, 1. The movement of the upper front shelf, 1.5, of the cabinet, 1, both vertically and horizontally ensures its constant horizontal position.

Fig. 6 shows the cabinet, 1, from Fig. 5 with the upper front shelf, 1.5, extended outwards, in a front view.

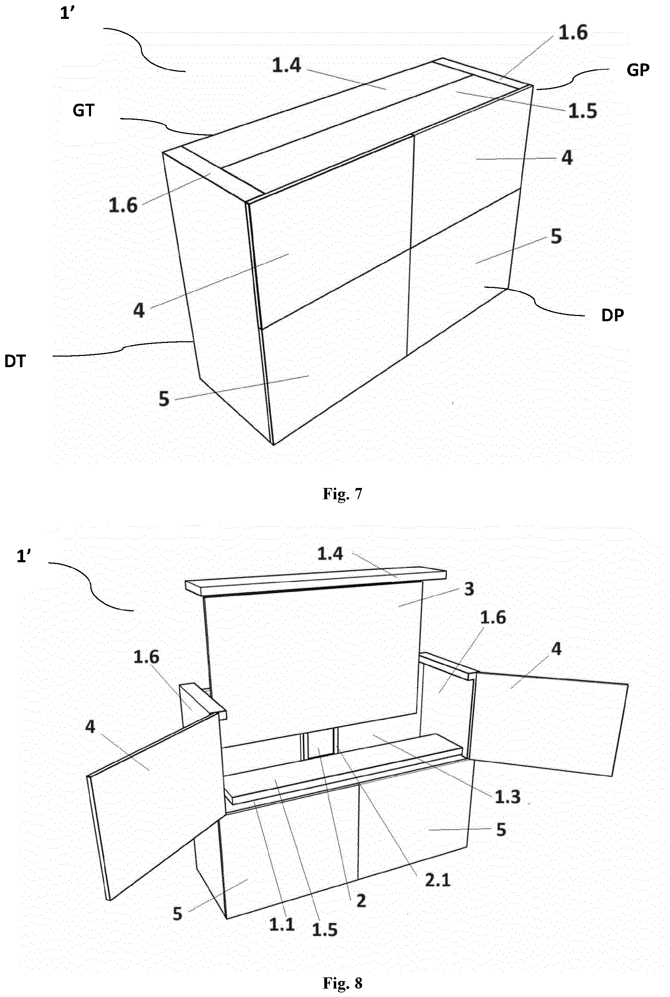

Fig. 7 shows the second exemplary embodiment of the cabinet, 1', according to the invention. The cabinet, 1', also consists of four zones: upper rear zone, GT, upper front zone, GP, lower rear zone, DT, lower front zone, DP. The cabinet, 1', has two vertical side walls, 1.6, an upper rear shelf, 1.4, and an upper front shelf, 1.5. The upper front zone, GP, of the cabinet, 1', is closed by upper doors, 4, while the lower front zone, DP, of the cabinet, 1', is closed by lower doors, 5. The doors can be made of the same material as the cabinet, 1', or they can be glazed or made of any material. Fig. 7 shows the cabinet, 1', in an axonometric view, with the device, 3, hidden and the upper front zone, GP, and lower front zone, DP, doors closed.

Fig. 8 shows the cabinet, 1', from Fig. 7, in an axonometric view, but here the device, 3, is extended and is fully visible. By extending the device, 3, the vertical rear wall, 1.3, becomes visible with the lifting mechanism, 2, located on it. The lifting mechanism, 2, is rectangular in shape, and has guides, 2.1, on its longer sides. When the lifting mechanism, 2, suspended from the upper rear shelf, 1.4, moves upwards along with the device, 3, located on it, then the upper front shelf, 1.5, is lowered so that it is located above the horizontal shelf, 1.1. The upper front shelf, 1.5, is in the upper front zone, GP. The upper front shelf, 1.5, has the same width as the horizontal shelf, 1.1, so that the upper doors, 4, of the cabinet, 1', can be both open and closed, so that the upper front shelf, 1.5, does not hinder their closing.

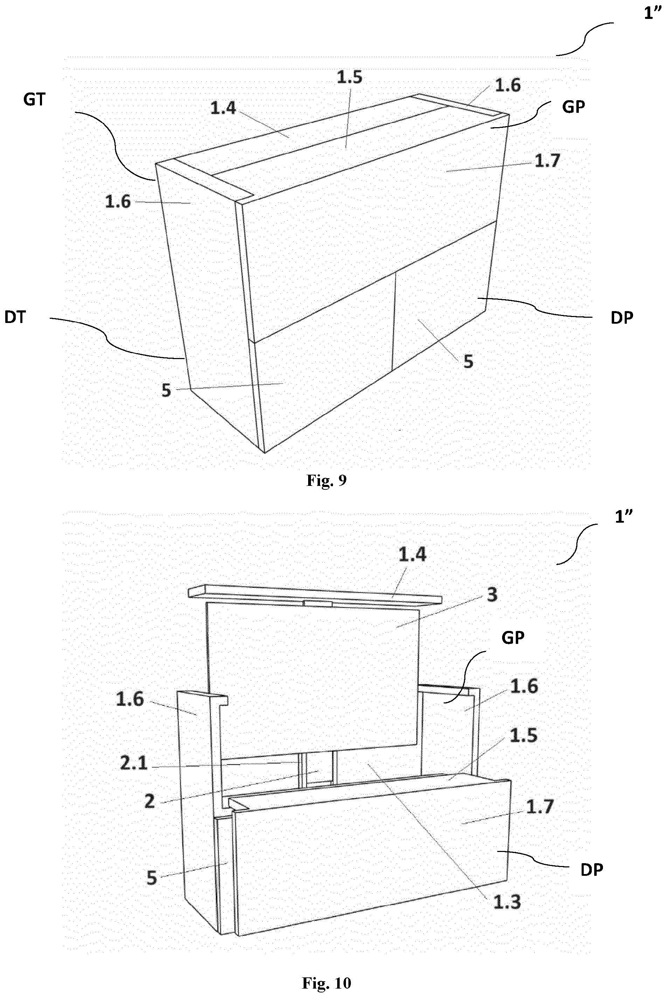

Fig. 9 shows the third exemplary embodiment of the solution according to the invention. The construction of the cabinet, 1", is as in the first exemplary embodiment, only the layout of the upper front zone, GP, is different. The cabinet, 1", consists of four zones: upper rear zone, GT, upper front zone, GP, lower rear zone, DT, lower front zone, DP. The cabinet, 1", has two vertical side walls, 1.6, an upper rear shelf, 1.4, and a monolithic upper composite consisting of the upper front shelf, 1.5, inseparably connected to it by a front vertical wall, 1.7. The upper front shelf, 1.5, is connected to the front vertical wall, 1.7, with its longer side, forming a monolithic connection in the upper front zone, GP. The lower front zone, DP, of the cabinet, 1", is closed by lower doors, 5.

On the other hand, Fig. 10 shows the cabinet, 1", with the device, 3, extended. The monolithic upper composite consisting of the upper front shelf, 1.5, and the front vertical wall, 1.7, is extended beyond the body of the cabinet, 1", so that the front vertical wall, 1.7, rests on the floor. Also here, a mechanism connected to the monolithic upper composite of the cabinet, 1", is used, enabling, in addition to the vertical movement between the vertical side walls 1.6, also horizontal movement, outwards beyond the cabinet, 1".

Advantageously, according to the invention, the cabinet, 1, 1', 1" has the shape of a cuboid with a height from 85 cm to 135 cm, a width from 155 cm to 240 cm and a depth from 30 cm to 40 cm. The upper front shelf, 1.5, as well as the upper rear shelf, 1.4, have dimensions - length from 145 cm to 230 cm, width from 10 cm to 30 cm. With a depth of the cabinet 1, 1', 1" with dimensions of 40 cm, the upper rear shelf, 1.4, can have a dimension of 10 cm, and the upper front shelf, 1.5, can have a dimension of 30 cm.

### List of designations in the drawings

1 cabinet
1' cabinet
1" cabinet
GT upper rear zone of the cabinet
GP upper front zone of the cabinet
DT lower rear zone of the cabinet
DP lower front zone of the cabinet
1.1 horizontal shelf
1.2 vertical internal wall
1.3 vertical rear wall
1.4 upper rear shelf
1.5 upper front shelf
1.6 vertical side wall
1.7 front vertical wall
2 lifting mechanism
2.1 guides
3 device
4 upper front zone doors
5 lower front zone door

## Claims

1. A cabinet with a lift having outer plate walls forming a cuboid shape, the plate walls sliding relative to each other, said cabinet containing elements for suspending inside the device, in particular a vertical lifting mechanism, to which a supporting element of the device is attached, slidingly mounted in vertical guides, **characterized in that** the space inside the cuboid cabinet (1, 1', 1") is divided into four cuboid zones: upper rear (GT), upper front (GP), lower rear (DT), lower front (DP), wherein the upper front (GP) and lower front (DP) zones are separated by a horizontal shelf (1.1) and the lower rear (DT) and lower front (DP) zones are separated by a vertical internal wall (1.2), wherein an upper rear shelf (1.4) of the cabinet (1, 1', 1") is attached to the upper part of the vertically moving guides (2.1) of the lifting mechanism (2) that is built into the vertical rear wall (1.3) of the cabinet (1, 1', 1") above the upper edge of the device (3) attached to the vertically moving guides (2.1), said upper rear shelf (1.4) of the cabinet (1, 1', 1") closing off the top of its upper rear zone (GT), while the upper front shelf (1.5) of the cabinet (1, 1', 1") closing off the top of its upper front zone (GP), said upper front shelf (1.5) is connected to a mechanism enabling its vertical movement between the vertical side walls (1.6) within the upper front zone (GP) of the cabinet (1, 1', 1") and/or horizontal movement, outside the cabinet (1, 1', 1"), above its horizontal shelf (1.1).

2. The cabinet according to claim 1, **characterized in that** the lifting mechanism (2) built into the vertical rear wall (1.3) of the cabinet (1, 1', 1") is partially and/or completely located within the upper rear zone (GT) and the lower rear zone (DT).

3. The cabinet according to claim 1, **characterized in that** during the movement of the upper front shelf (1.5) vertically and/or horizontally, its constant horizontal position is ensured.

4. The cabinet according to claim 1 or 3, **characterized in that** the dual lever mechanism is responsible for the vertical and/or horizontal movement of the upper front shelf (1.5) of the cabinet (1, 1', 1").

5. The cabinet according to claim 1, **characterized in that** the upper front wall (1.5) of the cabinet (1") is connected to the front upper wall (1.7) perpendicular to it, with a surface covering the upper front zone (GP) of the cabinet (1").

6. The cabinet according to claim 1, **characterized in that** the upper front zone (GP) of the cabinet (1') is closed by doors (4).

7. The cabinet according to claim 1, **characterized in that** the lower front zone (DP) of the cabinet (1', 1") is closed by doors (5).
